(19) Europäisches Patentamt
European Patent Office
Office européen des brevets

(11) **EP 2 457 074 B1**

(12) **EUROPEAN PATENT SPECIFICATION**

(45) Date of publication and mention
of the grant of the patent:
**26.03.2014   Bulletin 2014/13**

(21) Application number: **10726548.0**

(22) Date of filing: **01.07.2010**

(51) Int Cl.:
**G01K 7/42** *(2006.01)*

(86) International application number:
**PCT/EP2010/059396**

(87) International publication number:
**WO 2011/000928 (06.01.2011 Gazette 2011/01)**

(54) **TIME OF TAP CHANGER IN THE SAME CONTACT POSITION**

TAP-TIME-WECHSLER AN DERSELBEN KONTAKTPOSITION

DURÉE PENDANT LAQUELLE UN CHANGEUR DE PRISE EST PLACÉ DANS LA MÊME POSITION DE CONTACT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.07.2009   EP 09164274**

(43) Date of publication of application:
**30.05.2012   Bulletin 2012/22**

(73) Proprietor: **ABB Technology Ltd**
**8050 Zürich (CH)**

(72) Inventors:
• **ANDERSSON, Gunnar**
**S-770 14 Nyhammar (SE)**

• **STENESTAM, Bengt-Olof**
**S-771 42 Ludvika (SE)**

(74) Representative: **Ahrengart, Kenneth**
**ABB AB**
**Intellectual Property**
**Ingenjör Bååths Gata 11**
**721 83 Västerås (SE)**

(56) References cited:
**US-A- 6 124 726           US-A1- 2007 057 651**
**US-A1- 2007 225 945**

## Description

### Technical Field

The present invention relates generally to tap changers for transformers and reactors, and in particular to a method of calculating the time a tap changer of a transformer may be in the same contact position without risk for carbonisation of the contacts.

### Background

In power transformers, on-load tap changers (OLTC) are used to change tapping taps connections of transformer windings while the transformer is energised. When the contacts of the tap changer have been in the same position to long time, there is a severe risk that carbonisation on the contacts will occur. When current flows in a contact, the actual current flow path is not over the whole surface of the contacts. Since no surface is smooth if studied close enough, the actual contact surfaces where the current flows is in specific points, so called Alfa-spots or A-spots, where the contact surfaces are in direct contact with each other. If the temperature in the A-spots is too high, the risk of carbonisation is increased.

US2007057651 describes a on load tap changer (OLTC) where the temperature in the transformer tank and the temperature in the OLTC tank are monitored by temperature probes whose outputs are used to sense the temperature differential (TDIFF) between the transformer tank and the OLTC tank, to determine if the OLTC tank temperature exceeds the main tank temperature for a period of time exceeding a specified time period.

US2007225945 describes a control and diagnostic system for a transformer that may be retrofit with existing control and tap-changer equipment, the system providing for remote monitoring and control of the equipment.

### Summary of invention

It is an object of the invention to provide a method for calculating how long time the contact of the tap changer may be in one position limiting the risk of carbonisation of the contact surfaces.

This object is achieved by providing a method for calculating a time period, for which time period a tap changer in a transformer is placed in the same position. The method comprises the steps of measuring the temperature of the cooling and isolating media surrounding said tap changer and measuring the current load in the tap changer. From the measured values of the cooling and isolating media temperature and the current load, the contact temperature is calculated.

From the calculated contact temperature and the measured current load, the temperature of the A-spots located in the contact surface is calculated. From said calculated temperature of the A-spots, the ageing acceleration is calculated. The negative effect of large temperature variations is also taken into account. A maximum time period for the tap changer to be in the same position is then calculated from the calculated temperatures and the ageing acceleration.

In a preferred embodiment, the calculated maximum time period is compared to an actual time period passed since the tap changer contact position last was changed.

In a preferred embodiment, a warning message is provided if the actual time period exceeds the calculated maximum time period.

In a preferred embodiment is the calculated A-spot temperature compared to a predetermined A-spot temperature value. The predetermined A-spot value is individual for the specific tap changer.

In a preferred embodiment is the predetermined A-spot temperature value calculated with the Kohlrausch method.

In a preferred embodiment, a warning message is provided if the calculated A-spot temperature exceeds the predetermined A-spot value.

In a preferred embodiment, a warning message is provided if the calculated maximum temperature weighted time period exceeds a warning time limit.

In a preferred embodiment, an alarm message is provided if the calculated maximum temperature weighted time period exceeds an alarm time limit.

The invention further relates to a computer program for calculating a maximum temperature weighted time period, during which time period a tap changer contact in a transformer may be placed in the same position without risk for carbonisation of the contacts. The computer program comprises computer program code which, when run a computer media, performs the steps of receiving a measured value of a temperature of a cooling and isolating media surrounding the tap changer, receiving a measured value of a current load in the tap changer, calculating a contact temperature from the received measured values of the cooling and isolating media temperature and the current load, calculating a temperature of A-spots located in the contact surface from the calculated contact temperature and the received measured current load, calculating an ageing acceleration from the calculated temperature of the A-spots, calculating the maximum temperature weighted time period for the tap changer to be in the same position from the calculated temperatures and the ageing acceleration.

**Brief Description of the Drawings**

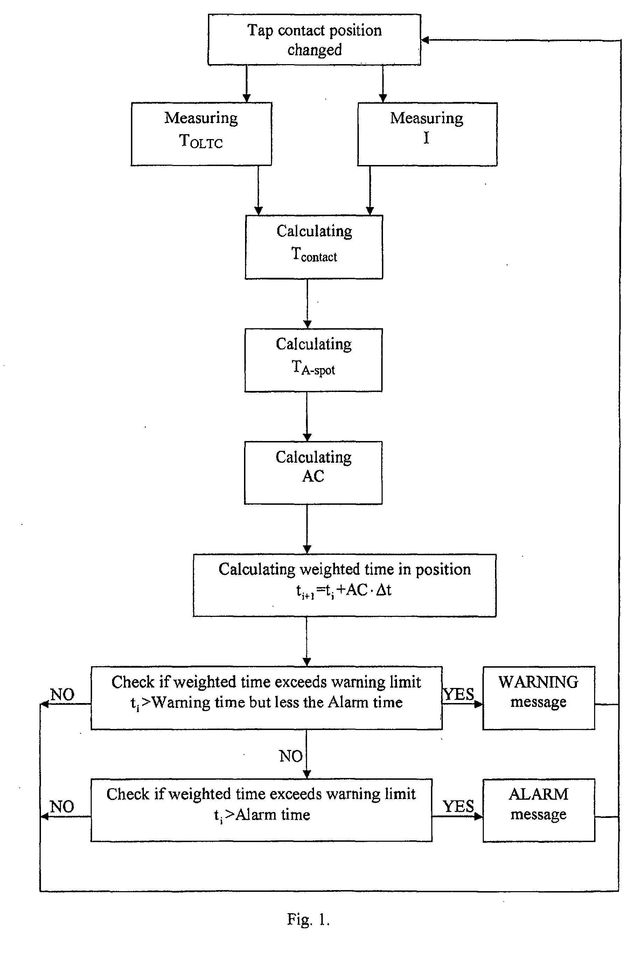

Figure 1 illustrates the workflow of the method according to the present invention.

**Detailed Description**

As illustrated in Figure 1, the present method works as follows. At preset time steps the procedure starts. It is checked when a tap contact position is changed. The temperature of the cooling and isolating media surrounding the tap changer, $T_{OLTC}$, and the present current load, I, is measured. Often, transformer oil is used as cooling and isolating media but any other suitable cooling and isolating media may be used. Based on the measured values $T_{OLTC}$ and I, the contact temperature $T_{contact}$ is calculated.

The calculation of a contact temperature from the measured values of said cooling and isolating media temperature and said current load is preferably made based on the following:

$$T_{Contact} = T_{Top} + c \cdot \left( \frac{I}{I_{Rated}} \right)^{1.6} \qquad\qquad c = \left( \frac{R}{C} \right)^{4/5} \cdot I_{Rated}^{1.6}$$

wherein

$T_{contact}$=Contact temperature
$T_{Top}$=Temperature in the tap-changer oil or if it is missing the transformer top oil temperature
I= Current in tap-changer
$I_{Rated}$= Tap-changer rated current
R= Resistance in one contact point
C= Cooling constant of the oil

The calculation is based on cooling of the contact, which is heated due to the transferred electrical power. Electrical power P= R * $I^2$, where R is contact resistance. The cooling of the contact is approximated with cooling calculation for self cooling of horizontal cylinders; P=C * $T^{5/4}$, wherein C is a cooling constant of the contact. The power 5/4 used can be adjusted depending on the shape of the contact, and is sometimes lower than 5/4. At equilibrium

$$R \times I^2 = C * T^{5/4}$$

and thus:

$$T = (R/C)^{4/5} * I^{1,6}$$

so that:

$$T_{Contact} = T_{Top} + c \cdot \left( \frac{I}{I_{Rated}} \right)^{1.6}$$

From the thus calculated $T_{contact}$ can the temperature of the A-spots, $T_{A\text{-}spots}$, in the contact surface be calculated.

The calculation of a temperature of A-spots located in the contact surface from said calculated contact temperature and said measured current load is preferably performed as:

$$T_{A-spot} = \sqrt{(T_{Contact} + 273)^2 + b \cdot \left(\frac{I}{I_{Rated}}\right)^2} - 273 \qquad b = \frac{R^2 \cdot I_{Rated}^2}{4 \cdot L}$$

Wherein L is a constant, which L=2,4*10-8

This is called the Kohlrausch method, or sometimes "calculation of the contact supertemperature."

The calculated $T_{A-spots}$ is compared to a reference value of the A-spot temperature, and thereafter is an ageing acceleration factor AC due to the temperature calculated.

The ageing (AC) due to the contact temperature at A-spot can be calculated according to the following:

$$AC = 2^d \qquad d = \frac{T_{A-spot} - T_{Ref}}{K_{Ar}}$$

wherein

$T_{A-spot}$= Temperature at the A-spot
$T_{Ref}$= Reference temperature at the A-spot for ageing speed
$K_{Ar}$= Arrhenius temperature for doubling of aging speed

Thus, $K_{Ar}$ is the temperature where ageing is doubled, corresponding to twice the chemical speed of reactions in accordance with the Arrhenius equation for chemical reactions. Twice the speed is in comparison to the speed at the reference temperature $T_{ref}$.

From the values calculated above, a maximum period of time for the tap changer to rest in the present position can be calculated. A reference time period, such as a maximum allowed time period for the tap changer in question, is suitably used, which reference time period is pre-determined for the reference temperature $T_{ref}$. The reference time period is compared to the actual time period adjusted by the ageing acceleration factor, so that it can be determined how close in time the determined time is to the maximum time limit.

The A-spot reference temperature may be calculated with the Kohlrausch method or any other suitable calculation method. The thus calculated weighted time period is thereafter compared to a Warning limit time and an Alarm time. If the calculated weighted time period exceeds the Warning limit time but is below the Alarm limit time, a Warning message is generated. If the calculated weighted time period exceeds both the Warning time limit and the Alarm time limit, an Alarm message is generated.

The contact ageing acceleration is preferably also compensated for by oil temperature variations. Thus, the contact ageing acceleration due to time and oil temperature variations is preferably used. The variation calculations are as follows.

First, the calculation of average temperature in the tap-changer uses the tap-changer $T_{OLTC}$ or alternatively the transformer top oil temperature if no thermometer is provided in the tap-changer.

$$T_{Average} = \frac{(\alpha - 1) \cdot T_{Average} + T_{OLTC}}{\alpha}$$

Wherein $\alpha$ = Amount of times the algorithm runs each day Calculating the variation in the average tap-changer temperature $T_{Average}$ is performed in accordance with:

$$T_{Var} = \frac{(\alpha - 1) \cdot T_{Var} + (T_{OLTC} - T_{Average})^2}{\alpha}$$

$$A_{AccTime} = 10*10^{-6}*T_{var}*D^2 + 1.6*10^{-3}*D + 1$$

D is the time in days.

The total contact ageing can now be calculated. This is done by multiplying ageing due to temperature with the acceleration factor due to time and temperature variations

$$\text{Contact ageing} = AC \cdot A_{Acc\ Time}$$

Contact ageing acceleration due to time and oil temperature variations can thus be calculated. This can, for example be done for each day. Having calculated a Contact ageing for a day gives a fictitious day value, for example 1,25 or 0,96 days. Summarising subsequent fictitious days for each day gives a calculated time period (or accumulated time period) in days that can be compared to a nominal period, or a life expectancy, for the contact situation. This means that the maximum time period for the tap changer to rest in the present position is determined. The calculated time period can also be compared to warning periods, and alarm periods, so that warnings and/or alarms can be effectuated when the corresponding number of days is reached. The basis for the calculations need not be a full day, it can for example be done five times a day wherein fictitious "fifths of days" are calculated and summarised.

Examples of contacts that may be subject to the method according to the present invention is diverter switch and selector switch main contacts in resistor type tap-changer; set of through-current-carrying contacts which has no transition impedance between the transformer winding and the contacts and does not switch any current, diverter switch and selector switch main switching contacts in resistor type tap-changer; set of contacts which has no transition impedance between the transformer winding and the contacts and makes and breaks current, diverter switch and selector switch transition contacts in resistor type tap-changer; set of contacts which is connected in series with a transition impedance and makes or breaks current, transfer contacts in reactor type tap-changer; set of contacts that makes or breaks current (please note that where by-pass contacts are not provided, the transfer contact is a continuous current-carrying contact), By-pass contacts (reactor type tap-changer); set of through-current-carrying contacts that commutates the current to the transfer contacts without any arc, bridging contacts; moveable current-carrying contacts that bridge between two fixed contacts when on-position. The method also takes into account different tap-changer designs in the calculation. Further, the calculation also takes into account if a contact remains in the same position although the current is now going through a different branch and a different contact of the tap-changer. The calculation also adjusts the acceleration if there are large temperature variations.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A method for calculating a maximum temperature weighted time period, during which time period a tap changer contact in a transformer may be placed in the same position without risk for carbonisation of the contacts, said method comprising the steps of:

   - measuring a temperature of a cooling and isolating media surrounding said tap changer,
   - measuring a current load in said tap changer,

   **characterised in that** it further comprises the steps of:

   - calculating a contact temperature from the measured values of said cooling and isolating media temperature and said current load,
   - calculating a temperature of A-spots located in the contact surface from said calculated contact temperature and said measured current load,
   - calculating an ageing acceleration from said calculated temperature of the A-spots,
   - calculating said maximum temperature weighted time period for the tap changer to be in the same position from said calculated ageing acceleration.

2. The method according to claim 1, wherein the calculated maximum time period is compared to an actual time period passed since the tap changer contact position last was changed.

3. The method according to claim 2, wherein a warning message is provided if the actual time period exceeds the calculated maximum time period.

4. The method according to any of the preceding claims, wherein said calculated A-spot temperature is compared to a predetermined A-spot temperature value, said predetermined A-spot value being individual for the specific tap changer.

5. The method according to claim 4, wherein said predetermined A-spot temperature value is calculated with the Kohlrausch method.

6. The method according to claim 4 or 5, wherein a warning message is provided if said calculated A-spot temperature exceeds the predetermined A-spot value.

7. The method according to any of the preceding claims, wherein a warning message is provided if said calculated maximum temperature weighted time period exceeds a warning time limit.

8. The method according to any of the preceding claims, wherein an alarm message is provided if said calculated maximum temperature weighted time period exceeds an alarm time limit.

9. The method according to any of claims 1-8, wherein an ageing factor based on the variations of the temperature is calculated from the measured temperature of the tap changer or transformer oil, and which ageing factor is combined with the ageing acceleration factor calculated from the A-spot temperature.

10. A computer program for calculating a maximum temperature weighted time period, during which time period a tap changer contact in a transformer may be placed in the same position without risk for carbonisation of the contacts, the computer program comprising computer program code which, when run a computer media, performs the steps of:

- receiving a measured value of a temperature of a cooling and isolating media surrounding said tap changer,
- receiving a measured value of a current load in said tap changer,
- calculating a contact temperature from the received measured values of said cooling and isolating media temperature and said current load,
- calculating a temperature of A-spots located in the contact surface from said calculated contact temperature and said received measured current load,
- calculating an ageing acceleration from said calculated temperature of the A-spots,
- calculating said maximum temperature weighted time period for the tap changer to be in the same position from said ageing acceleration.

**Patentansprüche**

1. Verfahren zum Berechnen einer maximalen temperaturgewichteten Zeitperiode, während der ein Stufenschalterkontakt in einem Transformator in derselben Position ohne ein Risiko einer Verkohlung der Kontakte angeordnet werden kann, wobei das Verfahren die folgenden Schritte aufweist:

- Messen einer Temperatur eines Kühl- und Isolationsmediums, das den Stufenschalter umgibt,
- Messen einer Strombelastung in dem Stufenschalter,

**dadurch gekennzeichnet, dass** das Verfahren ferner die folgenden Schritte aufweist:

- Berechnen einer Kontakttemperatur aus den gemessenen Werten der Temperatur des Kühl- und Isolationsmediums und der Strombelastung,
- Berechnen einer Temperatur von A-Punkten, die in der Kontaktfläche angeordnet sind, aus der berechneten Kontakttemperatur und aus der gemessenen Strombelastung,
- Berechnen einer Altersbeschleunigung aus der berechneten Temperatur der A-Punkte,
- Berechnen der maximalen temperaturgewichteten Zeitperiode für den Stufenschalter, um in derselben Position von der berechneten Altersbeschleunigung zu sein.

2. Verfahren nach Anspruch 1, wobei die berechnete maximale Zeitperiode mit einer tatsächlichen Zeitperiode verglichen wird, die vergangen ist, seitdem die Kontaktposition des Stufenschalters zuletzt geändert wurde.

3. Verfahren nach Anspruch 2, wobei eine Warnmeldung bereitgestellt wird, wenn die tatsächliche Zeitperiode die berechnete maximale Zeitperiode überschreitet.

4. Verfahren nach einem der vorhergehenden Ansprüche, wobei die berechnete A-Punkttemperatur mit einem vorgegebenen Wert einer A-Punkttemperatur verglichen wird, wobei der vorgegebene A-Punktwert individuell für den spezifischen Stufenschalter ist.

5. Verfahren nach Anspruch 4, wobei der vorgegebene Wert einer A-Punkttemperatur nach dem Kohlrauschverfahren berechnet wird.

6. Verfahren nach Anspruch 4 oder 5, wobei eine Warnmeldung bereitgestellt wird, wenn die berechnete A-Punkttemperatur den vorgegebenen A-Punktwert überschreitet.

7. Verfahren nach einem der vorhergehenden Ansprüche, wobei eine Warnmeldung bereitgestellt wird, wenn die berechnete maximale temperaturgewichtete Zeitperiode eine Warnzeitgrenze überschreitet.

8. Verfahren nach einem der vorhergehenden Ansprüche, wobei eine Alarmmeldung bereitgestellt wird, wenn die berechnete maximale temperaturgewichtete Zeitperiode eine Alarmzeitgrenze überschreitet.

9. Verfahren nach einem der Ansprüche 1 bis 8, wobei ein Altersfaktor auf der Grundlage der Variationen der Temperatur aus der gemessenen Temperatur des Stufenschalters oder des Transformatoröls berechnet wird und wobei der Altersfaktor mit dem Altersbeschleunigungsfaktor, der aus der A-Punkttemperatur berechnet worden ist, kombiniert wird.

10. Computerprogramm zum Berechnen einer maximalen temperaturgewichteten Zeitperiode, während der ein Stufenschalterkontakt in einem Transformator in derselben Position ohne ein Risiko einer Verkohlung der Kontakte angeordnet werden kann, wobei das Computerprogramm einen Computerprogrammcode aufweist, der, wenn er auf einem Computermedium ausgeführt wird, die folgenden Schritte durchführt:

- Empfangen eines gemessenen Werts einer Temperatur eines Kühl- und Isolationsmediums, das den Stufenschalter umgibt,
- Empfangen eines gemessenen Werts einer Strombelastung in dem Stufenschalter,
- Berechnen einer Kontakttemperatur aus den empfangenen gemessenen Werten der Temperatur des Kühl- und Isolationsmediums und der Strombelastung,
- Berechnen einer Temperatur von A-Punkten, die in der Kontaktfläche angeordnet sind, aus der berechneten Kontakttemperatur und aus der empfangenen gemessenen Strombelastung,
- Berechnen einer Altersbeschleunigung aus der berechneten Temperatur der A-Punkte,
- Berechnen der maximalen temperaturgewichteten Zeitperiode für den Stufenschalter, um in derselben Position von der berechneten Altersbeschleunigung zu sein.

**Revendications**

1. Procédé de calcul d'une durée maximale pondérée par la température pendant laquelle un contact de changeur de prise d'un transformateur peut être placé dans la même position sans risque de carbonisation des contacts, ledit procédé comportant les étapes consistant à :

- mesurer une température d'un milieu de refroidissement et d'isolation entourant ledit changeur de prise,
- mesurer une charge de courant dans ledit changeur de prise,

**caractérisé en ce qu'**il en outre comporte les étapes consistant à :

- calculer une température de contact à partir des valeurs mesurées de ladite température du milieu de refroidissement et d'isolation et de ladite charge de courant,
- calculer la température de points A situés dans la surface de contact à partir de ladite température de contact calculée et de ladite charge de courant mesurée,
- calculer une accélération du vieillissement à partir de ladite température calculée des points A,
- calculer ladite durée maximale de séjour pondérée par la température du changeur de prise dans la même position à partir de ladite accélération calculée du vieillissement.

2. Procédé selon la revendication 1, la durée maximale calculée étant comparée à une durée réelle écoulée depuis que la position du contact de changeur de prise a été modifiée pour la dernière fois.

3. Procédé selon la revendication 2, un message d'avertissement étant émis si la durée réelle dépasse la durée maximale calculée.

4. Procédé selon l'une quelconque des revendications précédentes, ladite température calculée des points A étant comparée à une valeur prédéterminée de température des points A, ladite valeur prédéterminée des points A étant spécifique au changeur de prise considéré.

5. Procédé selon la revendication 4, ladite valeur prédéterminée de température des points A étant calculée par la méthode de Kohlrausch.

6. Procédé selon la revendication 4 ou 5, un message d'avertissement étant émis si ladite température calculée des points A dépasse la valeur prédéterminée des points A.

7. Procédé selon l'une quelconque des revendications précédentes, un message d'avertissement étant émis si ladite durée maximale calculée pondérée par la température dépasse une limite temporelle d'avertissement.

8. Procédé selon l'une quelconque des revendications précédentes, un message d'alarme étant émis si ladite durée maximale calculée pondérée par la température dépasse une limite temporelle d'alarme.

9. Procédé selon l'une quelconque des revendications 1 à 8, un facteur de vieillissement basé sur les variations de la température étant calculé à partir de la température mesurée du changeur de prise ou de l'huile de transformateur, et ledit facteur de vieillissement étant combiné avec le facteur d'accélération du vieillissement calculé à partir de la température des points A.

10. Programme informatique destiné à calculer une durée maximale pondérée par la température pendant laquelle un contact de changeur de prise d'un transformateur peut être placé dans la même position sans risque de carbonisation des contacts, le programme informatique comportant du code de programme informatique qui, lorsqu'il est exécuté sur un support informatique, réalise les étapes consistant à :

- recevoir une valeur mesurée de la température d'un milieu de refroidissement et d'isolation entourant ledit changeur de prise,
- recevoir une valeur mesurée d'une charge de courant dans ledit changeur de prise,
- calculer une température de contact à partir des valeurs mesurées reçues de ladite température du milieu de refroidissement et d'isolation et de ladite charge de courant,
- calculer la température de points A situés dans la surface de contact à partir de ladite température de contact calculée et de ladite charge de courant mesurée reçue,
- calculer une accélération du vieillissement à partir de ladite température calculée des points A,
- calculer ladite durée maximale de séjour pondérée par la température du changeur de prise dans la même position à partir de ladite accélération du vieillissement.

Fig. 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007057651 A

- US 2007225945 A